# EUROPEAN PATENT APPLICATION

(11) **EP 4 660 578 A1**
(43) Date of publication of application: **10.12.2025**
(21) Application number: 24788131.1
(22) Date of filing: 11.04.2024
(51) Int. Cl.: G01C 15/00

(54) **STAKEOUT METHOD AND APPARATUS, DEVICE, AND STORAGE MEDIUM**

(30) Priority: 12.04.2023 CN 202310387753
(71) Applicant: Shanghai Huace Navigation Technology Ltd, Shanghai 201702 (CN); Wuhan Huace Satellite Technology Co., Ltd., Wuhan, Hubei 430074 (CN)
(72) Inventor: HAN, Minle, Shanghai 201702 (CN); LI, Zhongchao, Shanghai 201702 (CN); ZHU, Liang, Shanghai 201702 (CN); ZHANG, Cong, Shanghai 201702 (CN); MENG, Congtang, Shanghai 201702 (CN); LI, Zhihao, Shanghai 201702 (CN); XU, Yide, Shanghai 201702 (CN); LIU, Shihai, Wuhan, Hubei 430074 (CN); HAN, Jianjian, Wuhan, Hubei 430074 (CN)
(74) Representative: HGF
(86) International application number: PCT/CN2024/087149
(87) International publication number: WO 2024/213029

(57) **Abstract**

A stakeout method and apparatus, device, and storage medium are provided. The stakeout method includes: acquiring an image captured by a stakeout device and present position information of the stakeout device, where the image includes depth information for a ground surface relative to the stakeout device (S101); determining geographic projection information of the ground surface according to the image and the present position information, specifically, the geographic projection information is used for indicating three-dimensional position information of the ground surface, and the three-dimensional position information includes height information (S102); determining whether a ground surface transformation point is required to be used according to the geographic projection information and the position information of a target stakeout point (S103); and determining path information between the present position information of the stakeout device and the position information of the ground surface transformation point when use of the ground surface transformation point is determined to be required (S104).

## Description

This application claims priority to Chinese Patent Application No. 202310387753.1 filed with the China National Intellectual Property Administration (CNIPA) on Apr. 12, 2023, the disclosure of which is incorporated herein by reference in its entirety.

### TECHNICAL FIELD

This application relates to the field of surveying and mapping construction technology, for example, to a stakeout method, a stakeout apparatus, a device, and a storage medium.

### BACKGROUND

In the engineering field of surveying and mapping construction, the measurement work of measuring the plane position and elevation of the target on the drawing to the actual ground with certain measuring instruments and methods is called stakeout.

Real-time kinematic (RTK) carrier phase differential technology is widely used in the field of engineering construction. In the process of point stakeout, the operator compares the high-precision coordinates output in real time by the measuring equipment with the target stakeout point (i.e., the feature point) according to the geographic coordinates of the feature point on the drawing to give the forward direction and forward distance of the measuring equipment relative to the target stakeout point in the real world, to guide the operator to gradually approach the target stakeout point.

At present, due to the complexity of practical engineering measurement and the diversity of locations of stakeout points, professional operators need to be sufficiently familiar with the region where the target stakeout point is located, and the measurement equipment needs to be moved repeatedly to complete one stakeout of the stakeout point in the complex stakeout region. Especially for engineering tasks with large workloads, complex operation scenes, and tight delivery time, the operation difficulty and engineering complexity are high, and the work efficiency is relatively low, which affects the overall progress of the engineering.

### SUMMARY

A stakeout method, a stakeout apparatus, a device, and a storage medium are provided according to the present application to solve the technical problem of low stakeout efficiency in the related technologies.

According to an aspect of the present application, a stakeout method is provided, which is applied to a stakeout apparatus, and includes: acquiring an image captured by the stakeout device and present position information of the stakeout device, where the image includes depth information for a ground surface relative to the stakeout device; determining geographic projection information of the ground surface according to the image and the present position information, where the geographic projection information is used for indicating three-dimensional position information of the ground surface, and the three-dimensional position information includes height information; determining whether a ground surface transformation point is required to be used according to the geographic projection information and position information of a target stakeout point; and determining path information between the present position information of the stakeout device and position information of the ground surface transformation point when it is determined that the ground surface transformation point is required to be used.

In an optional embodiment, the method further includes: displaying the path information. The path information includes the distance and direction between the present position of the stakeout device and the position of the ground surface transformation point.

In an optional embodiment, the image includes: a two-dimensional image and a depth image taken by the stakeout device.

In an optional embodiment, the method further includes: acquiring inertial information of the stakeout device output by an inertial measurement unit in the stakeout device; where determining the geographic projection information of the ground surface according to the image and the present position information includes: determining the geographic projection information of the ground surface according to the two-dimensional image, the depth image and the inertial information of the stakeout device.

In an optional embodiment, determining the geographic projection information of the ground surface according to the two-dimensional image, the depth image and the inertial information of the stakeout device includes: performing time synchronization on the two-dimensional image, the depth image and the inertial information of the stakeout device; and determining the geographic projection information of the ground surface according to the two-dimensional image, the depth image and the inertial information of the stakeout device after the time synchronization.

In an optional embodiment, determining whether a ground surface transformation point is required to be used according to the geographic projection information and the position information of the target stakeout point, includes: converting the position information of the target stakeout point into coordinates of the target stakeout point in a pixel coordinate system; where the pixel coordinate system is a coordinate system constructed in the two-dimensional image; determining a corresponding position of the target stakeout point in the geographic projection information according to the coordinates of the target stakeout point in the pixel coordinate system; and determining the requirement to use a ground surface transformation point when the distance between the corresponding position of the target stakeout point in the geographic projection information and the target stakeout point is not zero.

In an optional embodiment, the method further includes: determining an intersection of the normal vector of the target stakeout point in the height direction and the ground surface as the ground surface transformation point.

According to another aspect of the present application, a stakeout apparatus is provided, which is arranged in a stakeout device, and includes: an acquisition module, a first determination module, a second determination module, and a third determination module.
The acquisition module is configured to acquire an image captured by the stakeout device and present position information of the stakeout device. The image includes depth information for a ground surface relative to the stakeout device.
The first determination module is configured to determine geographic projection information of the ground surface according to the image and the present position information. The geographic projection information is used for indicating three-dimensional position information of the ground surface, and the three-dimensional position information includes height information.
The second determination module is configured to determine whether a ground surface transformation point is required to be used according to the geographic projection information and position information of a target stakeout point.
The third determination module is configured to determine path information between the present position information of the stakeout device and position information of the ground surface transformation point when it is determined that the ground surface transformation point is required to be used.

According to another aspect of the present application, an electronic device is provided, which includes: an image sensor, configured to capture an image; a position sensor, configured to obtain present position information of the electronic device; at least one processor; and a memory establishing a communication connection with the at least one processor. The memory stores a computer program executable by the at least one processor, and the computer program, when executed by the at least one processor, causes the at least one processor to execute the stakeout method according to any embodiment of the present application.

According to another aspect of the present application, a computer-readable storage medium is provided, which stores a computer instruction. The computer instruction is used to cause a processor to implement the stakeout method according to any embodiment of the present application when the processor executes the computer instruction.

### BRIEF DESCRIPTION OF DRAWINGS

FIG. 1 is a flow chart of a stakeout method provided according to an embodiment of the present application;
FIG. 2 is a schematic diagram showing modules of a stakeout method provided according to an embodiment of the present application;
FIG. 3 is a schematic diagram of a stakeout device provided according to an embodiment of the present application;
FIG. 4 is a schematic diagram of an application scene of a stakeout method provided according to an embodiment of the present application;
FIG. 5 is a schematic structural diagram of a stakeout apparatus provided according to an embodiment of the present application; and
FIG. 6 is a schematic structural diagram of an electronic device for implementing the stakeout method of an embodiment of the present application.

### DETAILED DESCRIPTION

The technical solutions in the embodiments of the present application are described hereinafter in conjunction with the drawings in the embodiments of the present application.

The terms "target", "present", etc., in the specification and claims of the present application and the above drawings are intended to distinguish similar objects, and are not necessarily used to describe a specific order or sequence. It should be understood that the data used in this way can be interchanged where appropriate, so that the embodiments of the present application described here can be implemented in an order other than those illustrated or described here. Furthermore, the terms "including" and "having" and any of their variations are intended to cover non-exclusive inclusions, for example, a process, method, system, product or device that includes a series of steps or units is not necessarily limited to including those steps or units listed, but may include other steps or units that are not clearly listed or inherent to the process, method, product or device.

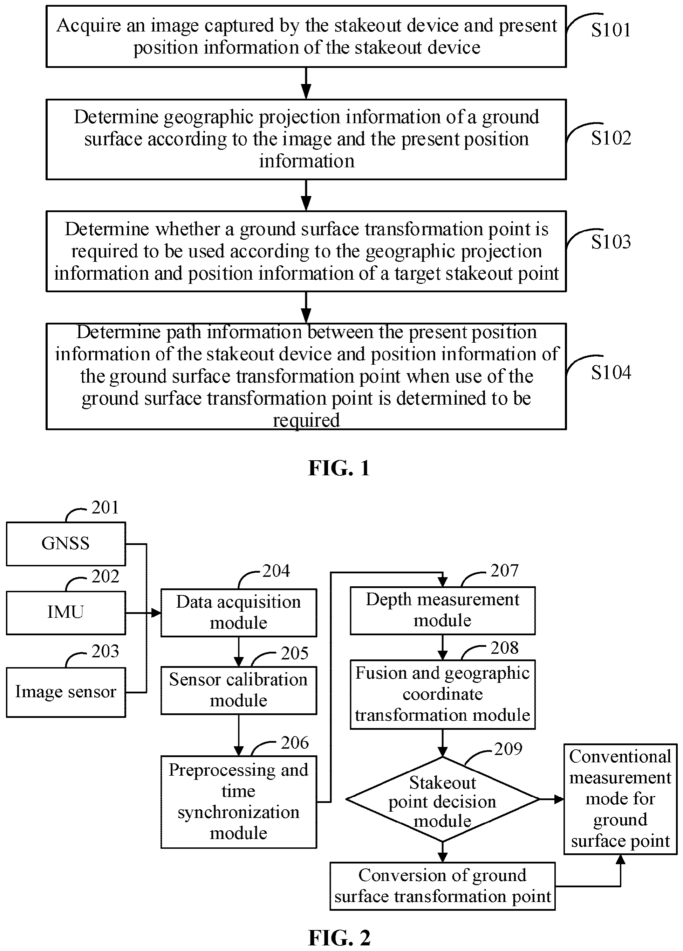

FIG. 1 is a flow chart of a stakeout method provided according to an embodiment of the present application. This embodiment can be applied to the situation of stakeout feature points in a map in the field of surveying and mapping construction, and to the scene of stakeout in a complex stakeout region. The method can be performed by a stakeout apparatus, and the stakeout apparatus can be implemented in the form of hardware and/or software, and can be configured in an electronic device, for example, a stakeout device. As shown in FIG. 1, the method includes steps 101 to 104.

In step 101, an image captured by the stakeout device and present position information of the stakeout device are acquired.

The image includes depth information for a ground surface relative to the stakeout device.

Optionally, the present position information of the stakeout device can be acquired through a navigation system, for example, a global navigation satellite system (GNSS). The present position information obtained can be the present three-dimensional position information in a projection coordinate system. In this embodiment, there is no restriction on the specific projection coordinate system used, and the projection coordinate system used can be any existing projection coordinate system, for example, the Universal Transverse Mercartor Grid System (UTM) coordinate system.

The stakeout device is equipped with an image sensor for capturing images within its field of view. In this embodiment, the image captured by the stakeout device includes depth information for the ground surface relative to the stakeout device.

In one implementation, the image sensor of the stakeout device captures an image, and the image includes the depth information for the ground surface relative to the stakeout device.

In another implementation, the image sensor of the stakeout device captures two images: a two-dimensional image and a depth image. The depth image includes the depth information for the ground surface relative to the stakeout device. Accordingly, the stakeout device includes two types of image sensors: a passive optical camera and an active depth camera. The passive optical camera captures a two-dimensional image. The active depth camera captures a depth image. Exemplarily, the active depth camera may be a time of flight camera (ToF camera), it may also be other types of depth cameras, and this embodiment is not limited thereto. The two-dimensional image in this embodiment may also be referred to as a color mode (Red Green Blue, RGB) image. The depth image may also be referred to as a (Red Green Blue Depth) RGBD image. Optionally, the depth information in this embodiment may be controlled at the centimeter level.

In step 102, geographic projection information of the ground surface is determined according to the image and the present position information.

The geographic projection information is used for indicating three-dimensional position information of the ground surface, and the three-dimensional position information includes height information.

In this embodiment, after the image and the present position information are obtained, data fusion may be performed on the image and the present position information to obtain the geographic projection information of the ground surface.

One possible fusion method is to determine the height information of the ground surface according to the depth information for the ground surface relative to the stakeout device in the image and the present position information of the stakeout device; and determine the position information of other two dimensions of the ground surface according to the distance between the stakeout device and the ground surface in the horizontal plane in the image and the present position information of the stakeout device.

The three-dimensional position information of the ground surface in this embodiment may refer to the three-dimensional position information of multiple points on the ground surface.

In a scene where the image includes a two-dimensional image and a depth image, the two-dimensional image shows the ground region in the presently captured scene obtained according to the ground segmentation algorithm. The depth image includes the depth information of the observed scene.

Optionally, the stakeout device in this embodiment may further include an inertial measurement unit (IMU) to provide the stakeout device with variations of six or nine degrees of freedom, for example, to provide the acceleration variations in three directions and the angular velocity variations in three directions. The three directions here may be the x-axis direction, the y-axis direction, and the z-axis direction in the projection coordinate system.

During the operation of the stakeout device, the inertial measurement unit will output the inertial information of the stakeout device. As shown above, the inertial information here can be the acceleration variation of the stakeout device in three directions and the angular velocity variation of the stakeout device in three directions.

In a possible implementation, the stakeout method provided in this embodiment may further include: acquiring inertial information of the stakeout device output by the inertial measurement unit in the stakeout device. Accordingly, step 102 may be: determining the geographic projection information of the ground surface based on the acquired two-dimensional image, the acquired depth image, and the inertial information of the stakeout device.

In the above implementation, the inertial information of the stakeout device is used in the process of data fusion to improve the accuracy of the depth of the ground surface point, that is, to improve the accuracy of the height information of the ground surface. This is because the IMU can generate motion offsets during the movement of the stakeout device, such as acceleration offsets, angular velocity offsets, etc., in combination with multiple frames of images, thus, in calculating the reprojection errors based on key points, the reprojection errors between multiple frames can be minimized, thereby improving the accuracy of the depth of the ground surface point. The ground surface point in this embodiment refers to a point on the ground surface.

In step 102, time synchronization can be performed on the two-dimensional image, the depth image, and the inertial information of the stakeout device; and the geographic projection information of the ground surface is determined based on the two-dimensional image, the depth image, and the inertial information of the stakeout device after the time synchronization. Since the two-dimensional image, the depth image, and the inertial information are input by different sensors, in this implementation, the data input by the sensors of multiple sources can be time synchronized to ensure that the multi-source data are aligned at the same timestamp to ensure the accuracy of the geographic projection information.

Optionally, in step 102, pre-processing such as denoising, filtering, and smoothing may further be performed on the two-dimensional image, the depth image, and the inertial information of the stakeout device to improve the efficiency and accuracy of determining the geographic projection information of the ground surface.

The present position information of the stakeout device obtained in this embodiment can be a fixed solution obtained by receiving satellite signals through the navigation system and fusing the received satellite positioning raw data with inertial data from the IMU, that is, a solution with stable coordinates and the highest accuracy.

In step 103, whether a ground surface transformation point is required to be used is determined according to the geographic projection information and position information of a target stakeout point.

After the geographic projection information is determined, in this embodiment, it is necessary to determine whether a ground surface transformation point is required to be used based on the geographic projection information and the position information of the target stakeout point. The ground surface transformation point in this embodiment refers to the replacement point of the target stakeout point on the ground surface.

The position information of the target stakeout point in this embodiment can be obtained based on the surveying and mapping drawings. Optionally, the position information of the target stakeout point can be three-dimensional. The position information of the target stakeout point here can be position information in the projection coordinate system.

In a possible implementation, the following method is used to determine whether the ground surface transformation point is required to be used: converting the position information of the target stakeout point into coordinates of the target stakeout point in a pixel coordinate system; where the pixel coordinate system is a coordinate system constructed in the two-dimensional image; determining a corresponding position of the target stakeout point in the geographic projection information according to the coordinates of the target stakeout point in the pixel coordinate system; and determining the requirement to use a ground surface transformation point when the distance between the corresponding position of the target stakeout point in the geographic projection information and the target stakeout point is not zero.

In the process of converting the position information of the target stakeout point into the coordinates of the target stakeout point in the pixel coordinate system, the following method can be used to implement this process: the position information of the target stakeout point in the projection coordinate system is known, and the pixel coordinate position corresponding to the target stakeout point on the two-dimensional image can be obtained through the transformation from the projection coordinate system to the camera coordinate system, and then through the transformation from the camera coordinate system to the pixel coordinate system, that is, the coordinates of the target stakeout point in the pixel coordinate system can be obtained. The camera coordinate system can be a coordinate system constructed in the depth image. In the process of coordinate transformation, the coordinate transformation can be performed according to the calibration parameter matrix between multiple sensors.

Optionally, the geographic projection information may also be position information in a projection coordinate system. In the process of determining the position corresponding to the target stakeout point in the geographic projection information according to the coordinates of the target stakeout point in the pixel coordinate system, the position corresponding to the target stakeout point in the geographic projection information may be determined according to the transformation matrix between the pixel coordinate system and the projection coordinate system.

The geographic projection information indicates the three-dimensional position information of the ground surface, therefore, if the distance between the target stakeout point and the position corresponding to the target stakeout point in the geographic projection information is not zero, it indicates that the target stakeout point is a non-ground surface point, that is, the target stakeout point is underground or above ground. Non-ground surface points cannot be truly staked out, so in this implementation, a ground surface transformation point is used to replace the target stakeout point.

In another possible implementation, the following method is used to determine whether the ground surface transformation point is required to be used: converting the position information of the target stakeout point into coordinates of the target stakeout point in a pixel coordinate system; where the pixel coordinate system is a coordinate system constructed in the two-dimensional image; determining a corresponding position of the target stakeout point in the geographic projection information according to the coordinates of the target stakeout point in the pixel coordinate system; and determining the requirement to use a ground surface transformation point when the distance between the corresponding position of the target stakeout point in the geographic projection information and the target stakeout point is greater than a preset threshold.

The above method of determining whether a ground surface transformation point is required to be used is efficient and convenient, and improves the efficiency of stakeout.

Optionally, when it is determined that a ground surface transformation point is required to be used, the position of the ground surface transformation point may further be determined. A possible implementation for determining a ground surface transformation point is to determine the intersection of the normal vector of the target stakeout point in the height direction and the ground surface as a ground surface transformation point. In this implementation, calculation can be performed in the projection coordinate system. Since the position information of the target stakeout point is known, the position information of each point on the ground surface may also be determined according to the geographic projection information of the ground surface. Therefore, the intersection of the normal vector of the target stakeout point in the height direction and the ground surface can be determined, and the intersection is used as the ground surface transformation point. This implementation of determining the ground surface transformation point has high efficiency and accuracy, which improves the efficiency of the stakeout. The height direction in this embodiment refers to the direction of the z-axis in the projection coordinate system, which may also be called the vertical direction.

After the ground surface transformation point is determined, it is equivalent to also knowing the change between the normal vectors of the ground surface transformation point and the target stakeout point in the height direction. In the scene where the target stakeout point is underground, it is equivalent to digging at the ground surface transformation point, and the excavation distance is just the change between the normal vectors of the ground surface transformation point and the target stakeout point in the height direction.

In step 104, path information between the present position information of the stakeout device and position information of the ground surface transformation point is determined when use of the ground surface transformation point is determined to be required.

Optionally, the path information may include the distance and direction between the present position of the stakeout device and the position of the ground surface transformation point.

In this embodiment, the expression form of the path information is not limited. For example, the path information may be expressed in the form of navigation on a map. The path information may also be expressed in the form of text, pictures, audio, video, and other multimedia information. This embodiment is not limited to this.

After the path information between the present position information of the stakeout device and the position information of the ground surface transformation point is determined, the operator can place the stakeout device at the ground surface transformation point according to the path information to achieve a one-time stakeout. It can be seen that the stakeout method provided in this embodiment can achieve one-shot in the scene where the target stakeout point is a non-ground surface point, and the stakeout is fast and accurate, which effectively improves the efficiency and accuracy of stakeout and reduces the difficulty of stakeout.

Optionally, when it is determined that the ground surface transformation point is not required to be used, the path information between the present position information of the stakeout device and the position information of the target stakeout point is determined according to the present position information of the stakeout device and the position information of the target stakeout point.

Optionally, the stakeout device in this embodiment may further include a display module. After the path information between the present position information of the stakeout device and the position information of the ground surface transformation point is determined, the path information can be displayed in the display module of the stakeout device. Displaying the path information in the display module can guide the operator so that the operator can quickly find the position of the ground surface transformation point, and the efficiency of the stakeout can be improved. Displaying the path information in the display module realizes the display of the path information by visual means, so that the operator has a clear understanding and decision-making for the present position information, the position change amount, and direction from the ground surface transformation point.

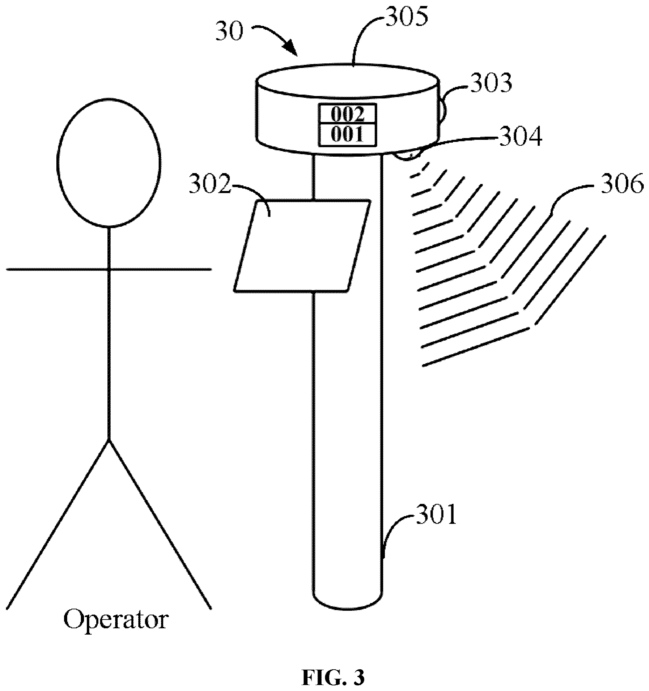

FIG. 3 is a schematic diagram of a stakeout device provided according to an embodiment of the present application. As shown in FIG. 3, the stakeout device 30 includes: a measuring rod 301, a display module 302, a navigation system 002, an IMU001, a passive optical camera 303, an active depth camera 304, a device body 305, and a controller (not shown in the figure). One end of the measuring rod 301 is connected to the device body 305. The measuring rod 301 is configured to support the device body 305. The display module 302 can be set on the device body 305 or on the measuring rod 301. In FIG. 3, the display module 302 set on the measuring rod 301 is taken as an example. The navigation system 002, IMU001, passive optical camera 303, and active depth camera 304 are all arranged on the device body 305. The display module 302, the navigation system 002, IMU001, the passive optical camera 303, and the active depth camera 304 are all electrically connected to the controller. The controller executes the steps from step 101 to step 104 according to the data input by the navigation system 002, IMU001, the passive optical camera 303, and the active depth camera 304. Afterwards, the obtained path information between the present position information of the stakeout device and the position information of the ground surface transformation point can be displayed in the display module 302. The operator can move toward the ground surface transformation point according to the path information displayed in the display module 302 to achieve a one-shot stakeout effect. The region 306 in FIG. 3 is a schematic diagram of the shooting range of the active depth camera 304. In practice, the shooting range of the active depth camera 304 can be other shapes.

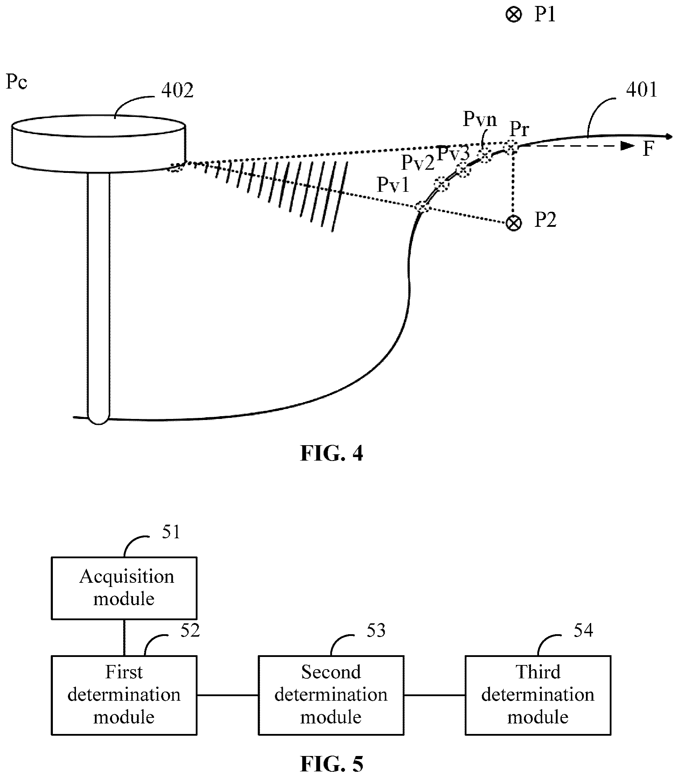

FIG. 4 is a schematic diagram of an application scene of a stakeout method provided according to an embodiment of the present application. As shown in FIG. 4, the target stakeout point P2 is located below the ground surface 401, and the target stakeout point P1 is located above the ground surface 401.

In the stakeout process in the related art, multiple stakeouts and multiple moves of the measuring rod will occur. That is, for a target stakeout point, repeated pauses and repeated operations appear from position Pv1 to position Pvn until the vertical ground point corresponding to P1 or P2 is reached.

In the stakeout method provided in this embodiment, the image taken by the stakeout device 402 and the present position information Pc of the stakeout device 402 are obtained. According to the image and the present position information Pc, the geographic projection information of the ground surface 401 is determined. It can be seen that the ground surface 401 in this example is not a plane, but a curved surface. According to the geographic projection information of the ground surface 401 and the position information of P2 or P1, it is determined whether the ground surface transformation point is required to be used. P1 or P2 can be converted into coordinates in the pixel coordinate system first. Then, according to the coordinates of P1 or P2 in the pixel coordinate system, the corresponding position of P1 or P2 in the geographic projection information is determined. In the figure, the determined corresponding position of P1 or P2 in the geographic projection information may be any one of Pv1, Pv2, Pv3, or Pvn. There can be multiple points between Pv3 and Pvn, and the figure shows only an example. It can be seen that the distance between the corresponding position of P1 or P2 in the geographic projection information and P1 or P2 in this example is not zero, indicating that P1 or P2 is a non-ground surface point, and a ground surface transformation point is required to be used.

In determining the ground surface transformation point, the intersection of the normal vector F of P1 or P2 in the height direction and the ground surface 401 is determined as the ground surface transformation point Pr. Then, the ground surface transformation point Pr is just staked out.

It can be seen that compared with the related art, the stakeout method provided in this embodiment does not require repeated pauses and repeated operations in Pv1, Pv2, Pv3, or Pvn. Instead, it is first determined whether the ground surface transformation point is required to be used. When it is determined that the ground surface transformation point is required to be used, the ground surface transformation point is directly staked out, which overcomes the difficulty of the conventional stakeout method in that the target stakeout point of a specific scene is staked out multiple times. With the stakeout method in this embodiment, stakeout is easy to operate, can be precisely controlled, and fast and accurate stakeout can be achieved. The efficiency and accuracy of stakeout are effectively improved, the difficulty of stakeout work is reduced, and the goal of stakeout with one shot is achieved.

FIG. 2 is a schematic diagram showing modules of a stakeout method provided according to an embodiment of the present application. As shown in FIG. 2, the schematic diagram of modules the stakeout method includes the following modules: a GNSS 201, IMU 202, image sensor 203, data acquisition module 204, sensor calibration module 205, preprocessing and time synchronization module 206, depth measurement module 207, fusion and geographic coordinate transformation module 208, and stakeout point decision module 209. The GNSS 201, IMU 202, and the image sensor 203 are connected to an input end of the data acquisition module 204. An output end of the data acquisition module 204 is connected to an input end of the sensor calibration module 205. An output end of the sensor calibration module 205 is connected to an input end of the preprocessing and time synchronization module 206. An output end of the preprocessing and time synchronization module 206 is connected to an input end of the depth measurement module 207. An output end of the depth measurement module 207 is connected to an input end of the fusion and geographic coordinate transformation module 208. An output end of the fusion and geographic coordinate transformation module 208 is connected to an input end of the stakeout point decision module 209.

The data acquisition module 204 is configured to perform RGB image data acquisition, RGBD image data acquisition, inertial data acquisition, and data acquisition for real-time satellite calculated positions.

The sensor calibration module 205 is mainly configured to precisely calibrate the sensor internal parameters and the external parameters between sensors through a calibration algorithm to obtain the transformation matrix between different sensor coordinate systems. The sensors in this embodiment refer to the GNSS 201, the IMU 202, and the image sensor 203.

The preprocessing and time synchronization module 206 is configured to denoise, filter, smooth, and time synchronize the input data to ensure that multi-source data are aligned at the same timestamp.

The depth measurement module 207 is configured to perform depth perception on the scene below the front of the stakeout device.

The fusion and geographic coordinate transformation module 208 is configured to fuse two-dimensional image data, three-dimensional depth image data, geographic coordinate data, and inertial data. The two-dimensional image data is intended to obtain the ground surface region in the present scene according to the ground surface segmentation algorithm. The three-dimensional depth image data is used to obtain the expression of the depth information of the observed scene. Multi-source sensor fusion is to fuse and transform two-dimensional image data, three-dimensional depth image data, location information output by the global satellite navigation system, and inertial information output by the IMU according to the attribute parameters of the camera and the transformation parameters between sensors to obtain the geographic projection information of the ground surface. In this embodiment, the ground surface may also be called the target surface region.

The stakeout point decision module 209 determines whether it is necessary to establish a ground surface transformation point based on the relative position relationship between the target stakeout point and the ground surface point. In the case where a ground surface transformation point is required to be established, the ground surface transformation point is converted. In the case where a ground surface transformation point is not required to be established, the stakeout measurement is performed according to the conventional ground surface point measurement mode.

The module shown in FIG. 2 is a module in the controller of the stakeout device. The controller of the stakeout device can also realize task scheduling, rational control of the power of the stakeout device, control of the frequency of sensor data acquisition, and remote sharing of information. For example, at least one of the present location information, geographic projection information, and determined path information can be shared with a remote server.

With the stakeout method provided in this embodiment, in the process of stakeout, the depth information for the ground surface relative to the stakeout device is utilized, to fuse the image and the present position information to determine the geographic projection information of the ground, and then the geographic projection information of the ground surface and the position information of the target stakeout point are used to determine whether a ground surface transformation point is needed. If the ground surface transformation point is required to be used, the path information between the present position information and the position information of the ground surface transformation point is determined. In a specific scene, the stakeout is realized by using the ground surface transformation point, which overcomes the problem of multiple stakeouts of the target stakeout point of a specific scene in the related technology, and achieves a one-shot work process, realizes the target effect of hitting the target with one shot, achieves convenient operation, precise control, fast and accurate stakeout, thereby effectively improving the stakeout efficiency and accuracy, reducing the difficulty of stakeout work, and reducing the waste of labor costs.

FIG. 5 is a schematic structural diagram of a stakeout apparatus provided according to an embodiment of the present application. As shown in FIG. 5, the apparatus includes the following modules: an acquisition module 51, a first determination module 52, a second determination module 53, and a third determination module 54.

The acquisition module 51 is configured to acquire an image captured by the stakeout device and present position information of the stakeout device.

The image includes depth information for a ground surface relative to the stakeout device.

The first determination module 52 is configured to determine geographic projection information of the ground surface according to the image and the present position information.

The geographic projection information is used for indicating three-dimensional position information of the ground surface, and the three-dimensional position information includes height information.

The second determination module 53 is configured to determine whether a ground surface transformation point is required to be used according to the geographic projection information and position information of a target stakeout point.

The third determination module 54 is configured to determine path information between the present position information of the stakeout device and position information of the ground surface transformation point when it is determined that the ground surface transformation point is required to be used.

Optionally, the device further includes: a display module configured to display the path information. The path information includes the distance and direction between the present position of the stakeout device and the position of the ground surface transformation point.

Optionally, the image includes: a two-dimensional image and a depth image taken by the stakeout device.

Optionally, the acquisition module 51 is further configured to acquire inertial information of the stakeout device output by an inertial measurement unit in the stakeout device. The first determination module 52 is further configured to: determine the geographic projection information of the ground surface according to the two-dimensional image, the depth image, and the inertial information of the stakeout device.

In one implementation, the first determination module 52 is configured to: perform time synchronization on the two-dimensional image, the depth image and the inertial information of the stakeout device; and determine the geographic projection information of the ground surface according to the two-dimensional image, the depth image and the inertial information of the stakeout device after the time synchronization.

Optionally, the second determination module 53 is configured to: convert the position information of the target stakeout point into coordinates of the target stakeout point in a pixel coordinate system, where the pixel coordinate system is a coordinate system constructed in the two-dimensional image; determine a corresponding position of the target stakeout point in the geographic projection information according to the coordinates of the target stakeout point in the pixel coordinate system; and determine the requirement to use a ground surface transformation point when the distance between the corresponding position of the target stakeout point in the geographic projection information and the target stakeout point is not zero.

Optionally, the apparatus further includes: a fourth determination module, which is configured to determine the intersection of the normal vector of the target stakeout point in the height direction and the ground surface as the ground surface transformation point.

The stakeout apparatus provided in the embodiment of the present application can execute the stakeout method provided in any embodiment of the present application, and has corresponding functional modules for executing the stakeout method.

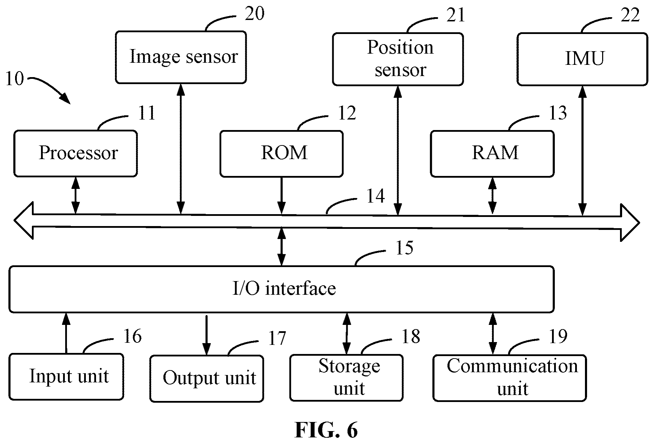

FIG. 6 is a schematic structural diagram of an electronic device for implementing the stakeout method of an embodiment of the present application. The electronic device 10 provided in this embodiment can be a stakeout device, and the electronic device 10 has efficient and stable hardware devices and an algorithm flow. It is intended to use electronic devices to represent various forms of digital computers, such as laptops, desktops, workstations, personal digital assistants, servers, blade servers, mainframes, and other suitable computers. Electronic devices may further represent various forms of mobile devices, such as personal digital assistants, cellular phones, smartphones, wearable devices (e.g., helmets, glasses, watches, etc.), and other similar computing devices. The components shown herein, their connections and relationships, and their functions, are used as examples only, and are not intended to limit implementations of the applications described and/or claimed herein.

As shown in FIG. 6, the electronic device 10 includes at least one processor 11, and a memory communicatively connected with the at least one processor 11, such as a read-only memory (ROM) 12, a random access memory (RAM) 13, etc., where the memory stores a computer program executable by at least one processor, and the processor 11 can perform various appropriate actions and processes according to a computer program stored in the ROM 12 or a computer program loaded from a storage unit 18 into the RAM 13. In the RAM 13, various programs and data necessary for the operation of the electronic device 10 may further be stored. The processor 11, ROM 12, and RAM 13 are connected through a bus 14. An input/output (I/O) interface 15 is also connected to the bus 14. The electronic device 10 further includes: an image sensor 20, and a position sensor 21. The image sensor 20 is configured to capture an image. The position sensor 21 is configured to obtain the present position information of the electronic device. The image sensor 20 and the position sensor 21 can also be connected through the bus 14. Optionally, the electronic device 10 may further include: an IMU 22. The IMU 22 is configured to obtain inertial information of the electronic device 10.

Multiple components in the electronic device 10 are connected to the I/O interface 15, include: an input unit 16, such as a keyboard, a mouse, etc.; an output unit 17, such as various types of displays, speakers, etc.; a storage unit 18, such as a magnetic disk, an optical disk etc.; and a communication unit 19, such as a network card, a modem, a wireless communication transceiver, and the like. The communication unit 19 allows the electronic device 10 to exchange information/data with other devices through a computer network such as the Internet and/or various telecommunication networks.

The processor 11 may be various general and/or special-purpose processing components having processing and computing capabilities. Some examples of the processor 11 include, but are not limited to, a central processing unit (CPU), a graphics processing unit (GPU), various dedicated artificial intelligence (AI) computing chips, various processors that run machine learning model algorithms, digital signal processing processors (DSP), and any suitable processor, controller, microcontroller, etc. The processor 11 performs the various methods and processes described above, such as the stakeout method.

In some embodiments, the stakeout method can be implemented as a computer program, which is tangibly contained in a computer-readable storage medium, for example, a storage unit 18. In some embodiments, part or all of the computer program may be loaded and/or installed on the electronic device 10 via the ROM 12 and/or the communication unit 19. When the computer program is loaded into the RAM 13 and performed by the processor 11, one or more steps of the stakeout method described above can be performed. Optionally, in other embodiments, the processor 11 may be configured in any other appropriate way (for example, by means of firmware) to perform the stakeout method.

Various implementations of the system and technique described above herein can be implemented in a digital electronic circuit system, an integrated circuit system, a field programmable gate array (FPGA), an application specific integrated circuit (ASIC), application specific standard parts (ASSP), a system on chip (SOC), a complex programmable logic device (CPLD), a computer hardware, firmware, software, and/or combinations thereof. These various embodiments may include being implemented in one or more computer programs which can be performed and/or interpreted on a programmable system including at least one programmable processor, the programmable processor can be a special-purpose or general-purpose programmable processor, can receive data and instruction from storage system, at least one input device, and at least one output device, and transmit data and instruction to the storage system, the at least one input device, and the at least one output device.

One or more computer programs for implementing the method of the present application may be written in one programming language or any combination of programming languages. These computer programs can be provided to a processor of a general-purpose computer, a special-purpose computer, or other programmable data processing apparatus, so that the computer programs, when being performed by the processor, cause the functions/operations specified in the flowchart and/or block diagram to be implemented. The computer programs may be performed entirely on the machine, partly on the machine, partly on the machine and partly on a remote machine as a stand-alone software package, or entirely on a remote machine or remote server.

In the context of the present application, a computer-readable storage medium may be a tangible medium that may contain or store a computer program for being used by an instruction execution system, apparatus, or device, or used in conjunction with an instruction execution system, apparatus, or device. A computer-readable storage medium may include, but is not limited to, an electronic, magnetic, optical, electromagnetic, infrared, or semiconductor system, apparatus, or device, or any suitable combination of the foregoing. Optionally, a computer-readable storage medium may be a machine-readable signal medium. More specific examples of machine-readable storage media would include one or more wire-based electrical connected or portable computer discs, hard drives, RAM, ROM, erasable programmable read-only memory (EPROM) or flash memory, optical fiber, compact disk read-only memory (CD-ROM), optical storage, magnetic storage, or any suitable combination of the foregoing.

To provide interaction with the user, the systems and techniques described herein can be implemented on an electronic device having a display device (e.g., a cathode ray tube (CRT) or liquid crystal display (LCD)) configured to display information to the user; and a keyboard and a pointing device (e.g., a mouse or a trackball) through which the user can provide input to the electronic device. Other kinds of devices can also be configured to provide interaction with the user; for example, the feedback provided to the user can be any form of sensory feedback (e.g., visual feedback, auditory feedback, or tactile feedback); and can be in any form (including acoustic input, speech input or, tactile input) to receive input from the user.

The systems and techniques described herein can be implemented in a computing system that includes back-end components (e.g., as a data server), or a computing system that includes middleware components (e.g., an application server), or a computing system that includes front-end components (e.g., a user computer having a graphical user interface or web browser through which a user can interact with embodiments of the system and technique described herein), or be implemented in a computing system including any combination of such backend components, middleware components, or front-end components. The components of the system can be interconnected by any form or medium of digital data communication (e.g., a communication network). Examples of communication networks include: local area networks (LANs), wide area networks (WANs), blockchain networks, and the Internet.

A computing system can include a client and a server. The client and the server are generally remote from each other and typically interact through a communication network. The relationship of the client and the server arises from computer programs running on the respective computers and having a client-server relationship with each other. The server can be a cloud server, also known as a cloud computing server or a cloud host, and is a host product in the cloud computing service system to overcome the drawbacks of difficult management and weak business expansion in traditional physical hosts and virtual private servers VPSs.

It should be understood that the various forms of processes shown above can be used in a reordered manner, with added steps or deleted steps. For example, the multiple steps recorded in this application can be executed in parallel, sequentially, or in different orders, as long as the expected results of the technical solution of this application can be achieved, which is not limited herein.

## Claims

1. A stakeout method, applied to a stakeout device, comprising:
acquiring an image captured by the stakeout device and present position information of the stakeout device, wherein the image comprises depth information for a ground surface relative to the stakeout device;
determining geographic projection information of the ground surface according to the image and the present position information, wherein the geographic projection information is used for indicating three-dimensional position information of the ground surface, and the three-dimensional position information comprises height information;
determining whether a ground surface transformation point is required to be used according to the geographic projection information and position information of a target stakeout point; and
determining path information between the present position information of the stakeout device and position information of the ground surface transformation point when use of the ground surface transformation point is determined to be required.

2. The stakeout method according to claim 1, further comprising:
displaying the path information, wherein the path information comprises a distance and direction between a present position of the stakeout device and a position of the ground surface transformation point.

3. The stakeout method according to claim 1, wherein the image comprises: a two-dimensional image and a depth image taken by the stakeout device.

4. The stakeout method according to claim 3, further comprising:
acquiring inertial information of the stakeout device output by an inertial measurement unit in the stakeout device, wherein
determining the geographic projection information of the ground surface according to the image and the present position information comprises:
determining the geographic projection information of the ground surface according to the two-dimensional image, the depth image, and the inertial information of the stakeout device.

5. The stakeout method according to claim 4, wherein determining the geographic projection information of the ground surface according to the two-dimensional image, the depth image, and the inertial information of the stakeout device comprises:
performing time synchronization on the two-dimensional image, the depth image, and the inertial information of the stakeout device; and
determining the geographic projection information of the ground surface according to the two-dimensional image, the depth image, and the inertial information of the stakeout device after the time synchronization.

6. The stakeout method according to claim 3, wherein determining whether the ground surface transformation point is required to be used according to the geographic projection information and the position information of the target stakeout point, comprises:
converting the position information of the target stakeout point into coordinates of the target stakeout point in a pixel coordinate system, wherein the pixel coordinate system is a coordinate system constructed in the two-dimensional image;
determining a corresponding position of the target stakeout point in the geographic projection information according to the coordinates of the target stakeout point in the pixel coordinate system; and
determining a requirement to use a ground surface transformation point when a distance between the corresponding position of the target stakeout point in the geographic projection information and the target stakeout point is not zero.

7. The stakeout method according to claim 3, further comprising:
determining an intersection of a normal vector of the target stakeout point in a height direction and the ground surface as the ground surface transformation point.

8. A stakeout apparatus, arranged in a stakeout device, the stakeout apparatus comprising:
an acquisition module, configured to acquire an image captured by the stakeout device and present position information of the stakeout device, wherein the image comprises depth information for a ground surface relative to the stakeout device;
a first determination module, configured to determine geographic projection information of the ground surface according to the image and the present position information, wherein the geographic projection information is used for indicating three-dimensional position information of the ground surface, and the three-dimensional position information comprises height information;
a second determination module, configured to determine whether a ground surface transformation point is required to be used according to the geographic projection information and position information of a target stakeout point; and
a third determination module, configured to determine path information between the present position information of the stakeout device and position information of the ground surface transformation point when use of the ground surface transformation point is determined to be required.

9. An electronic device, comprising:
an image sensor, configured to capture an image;
a position sensor, configured to obtain present position information of the electronic device;
at least one processor; and
a memory establishing a communication connection with the at least one processor, wherein
the memory stores a computer program executable by the at least one processor, and the computer program, when executed by the at least one processor, causes the at least one processor to execute the stakeout method according to any one of claims 1 to 7.

10. A computer-readable storage medium, storing a computer instruction, wherein the computer instruction is used to cause a processor to implement the stakeout method according to any one of claims 1 to 7 when the processor executes the computer instruction.
